# EUROPEAN PATENT SPECIFICATION

(11) **EP 4 376 192 B1**
(45) Date of publication and mention of the grant of the patent: **04.02.2026**
(21) Application number: 22911924.3
(22) Date of filing: 21.12.2022
(51) Int. Cl.: H01M 50/30, H01M 50/204, H01M 10/613, H01M 10/6567, H01M 50/358, H01M 50/367, H01M 50/383

(54) **BATTERY PACK AND ENERGY STORAGE SYSTEM COMPRISING SAME**
BATTERIEPACK UND ENERGIESPEICHERSYSTEM DAMIT
BLOC-BATTERIE ET SYSTÈME DE STOCKAGE D'ÉNERGIE LE COMPRENANT

(30) Priority: 21.12.2021 KR 20210184400; 20.12.2022 KR 20220179752
(43) Date of publication of application: 29.05.2024
(73) Proprietor: LG Energy Solution, Ltd., Seoul 07335 (KR)
(72) Inventor: YUN, Youngwon, Daejeon 34122 (KR); MOON, Jeong Oh, Daejeon 34122 (KR); LEE, Jaeki, Daejeon 34122 (KR); KIM, Kiyoun, Daejeon 34122 (KR); AHN, Jong Kyu, Daejeon 34122 (KR); KIM, Hyeon Kyu, Daejeon 34122 (KR); PARK, Gidong, Daejeon 34122 (KR); LEE, Seongju, Daejeon 34122 (KR)
(74) Representative: Plasseraud IP
(86) International application number: PCT/KR2022/020958
(87) International publication number: WO 2023/121291

(56) References cited:
- EP-A1- 4 325 646
- JP-A- 2023 010 129
- KR-A- 20150 061 200
- KR-A- 20150 139 440
- KR-A- 20160 045 462
- KR-A- 20170 090 261
- KR-A- 20170 135 469
- KR-A- 20190 036 260
- US-A1- 2020 328 389

## Description

The present disclosure relates to a battery pack and an energy storage system comprising the same, and more particularly, to a battery pack or the like designed to promote maintenance and management of the battery pack in normal times, while being configured to ensure safety even when a thermal event occurs.

### [BACKGROUND]

Due to its characteristics of being easily applicable to various products and electrical properties such as a high energy density, a secondary battery is not only commonly applied to a portable device, but universally applied to an electric vehicle (EV) or a hybrid electric vehicle (HEV) and an energy storage system that is propelled by an electric motor. This secondary battery is gaining attention for its primary advantage of remarkably reducing the use of fossil fuels and not generating by-products from the use of energy, making it a new eco-friendly and improving the energy efficiency.

The type of currently broadly used secondary batteries include a lithium ion battery, a lithium polymer battery, a nickel cadmium battery, a nickel hydrogen battery, a nickel zinc battery and the like. An operating voltage of the unit secondary battery cell, i.e., a unit battery cell, is about 2.5V to 4.5V. Therefore, if an output voltage higher than the operating voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set depending on the required output voltage or charge/discharge capacity.

Meanwhile, when a plurality of battery cells are connected in series or in parallel to configure a battery pack, it is common to configure a battery pack composed of at least one battery cell first, and then configure a battery pack or a battery rack by using at least one battery module and adding other components.

In addition, such secondary batteries are widely used not only in small-sized devices such as a portable electronic device, but also in medium- and large-sized devices such as an electric vehicle and an energy storage system (ESS), and the degree to which they are used is increasing rapidly. Moreover, in recent years, there has been an increasing tendency to use home battery packs as an application for storing electric power.

In the case of a conventional battery pack, it is necessary to have a structure capable of effectively supplying cooling water while smoothly discharging gas at the time of internal gas generation.

Document EP 4325646 A1 is part of the prior art according to Art. 54(3) EPC and discloses a battery pack with a filter placed in a venting hole. Document KR 2017/0135469 A discloses a battery pack comprising a filter.

### [DETAILED DESCRIPTION OF THE INVENTION]

### [Technical Problem]

Therefore, it is an object of the present disclosure to provide a battery pack that can effectively supply cooling water while smoothly discharging gas at the time of internal gas generation, and an energy storage system comprising the same. In addition, it is an object of the present disclosure to provide a battery pack designed to promote maintenance and management of the battery pack in normal times, and an energy storage system comprising the same.

However, the technical problem to be solved by the embodiments of the present disclosure is not limited to the above-described problems, and can be variously expanded within the scope of the technical idea included in the present disclosure.

### [Technical Solution]

In order to achieve the above objects, the invention relates to a battery pack according to claim 1.

The battery pack after the invention may present one or more features from dependent claims 2 to 13, in any combination allowed by the claims.

The invention also relates to an energy storage device according to claim 14.

### [Advantageous Effects]

According to various embodiments as described above, a battery pack that can effectively supply cooling water while smoothly discharging gas at the time of internal gas generation, and an energy storage device including the same can be provided.

According to one aspect of the present disclosure, a battery pack with improved safety can be provided.

In particular, according to one embodiment of the present disclosure, even if a thermal event occurs inside the battery pack, this thermal event can be quickly controlled.

Moreover, when issues such as thermal runaway or ignition occur in some of the plurality of battery cells contained in the battery pack, it can effectively prevent such issues from transferring to other modules.

Further, according to one embodiment of the present disclosure, a battery pack having a simple structure and enhanced in thermal safety can be provided.

Further, according to one embodiment of the present disclosure, design of a special waterproof and dustproof structure or the like is not necessary.

In particular, according to one embodiment of the present disclosure, it is possible to promote maintenance and management of the battery pack in normal times.

Further, according to one embodiment of the present disclosure, the battery packs of the same type are stacked by a plurality of numbers, thereby being able to provide products having various voltage ranges and/or electric storage capacities.

In addition, several other additional effects can be achieved by various embodiments of the present disclosure. Such various effects of the present disclosure will be described in detail in each embodiment, or descriptions of effects that can be easily understood by those skilled in the art will be omitted.

### [BRIEF DESCRIPTION OF THE DRAWINGS]

The accompanying drawings illustrate preferred embodiments of the present disclosure and, together with the detailed description provided below, serve to provide further understanding of the technical spirit of the present disclosure.
Fig. 1 is a diagram which schematically explains a battery pack according to one embodiment of the present disclosure;
Figs. 2 and 3 are diagrams which schematically explain the main parts of the battery pack of Fig. 1;
Fig. 4 is an exploded perspective view which schematically shows the configuration of a battery pack according to another embodiment of the present disclosure;
Fig. 5 is a perspective view of a cell module assembly included in the battery pack of Fig. 4;
Fig. 6 is a perspective view of a blocking member included in the battery pack of Fig. 4;
Fig. 7 is a perspective view of a pack case included in the battery pack of Fig. 4;
Fig. 8 is a partially enlarged view of a portion indicated by P1 in Fig. 7;
Fig. 9 is an exploded perspective view of the filter of Fig. 8;
Fig. 10 is a partially enlarged view of a portion indicated by P2 in Fig. 7;
Fig. 11 shows a case where the filter is removed from the pack case of Fig. 7;
Fig. 12 is a perspective view of an outer cover included in the battery pack of Fig. 4;
Fig. 13 is a perspective view when an outer cover is coupled to a pack case;
Fig. 14 shows the flow of venting gas in a cross section along line A6-A6' in Fig. 13;
Fig. 15 is a view explaining a case where the cell module assembly of Fig. 7 is housed in a pack case;
Fig. 16 is a perspective view of a fire-fighting tank included in the battery pack of Fig. 4;
Fig. 17 is a perspective cross-sectional view of the fire-fighting tank of Fig. 16;
Fig. 18 is a perspective view of an electrical connection unit included in the battery pack of Fig. 4;
Fig. 19 is a perspective view of a battery pack in which all components of the battery pack described above with reference to Figs. 4 to 17 are combined'
Fig. 20 is a perspective view which schematically shows the battery pack of Figs. 1 to 19; and
Figs. 21 and 22 are diagrams showing an embodiment in which the pack cases shown in Fig. 20 are stacked in numbers different from each other.

### [DETAILED DESCRIPTION OF THE E MBODIMENTS]

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity. Meanwhile, similarly to the case where it is described as being disposed "on" or "above" another part, the case where it is described as being disposed "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

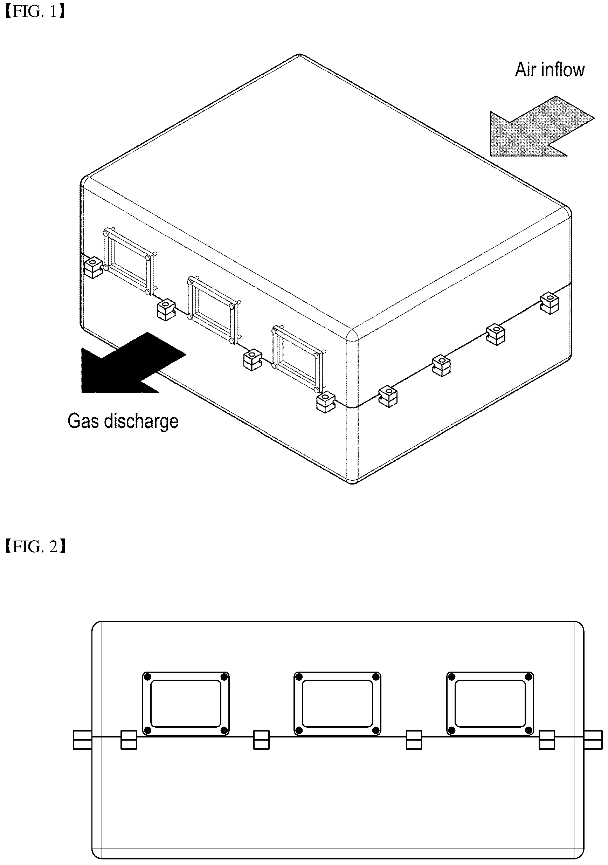

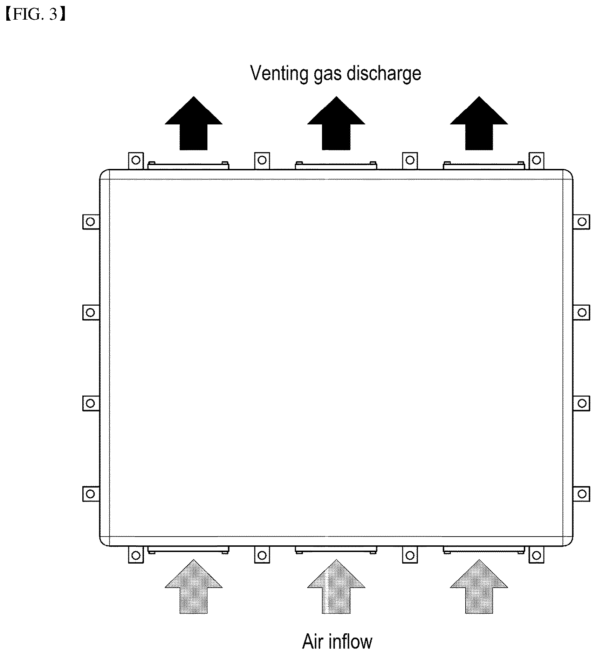

Fig. 1 is a diagram which schematically explains a battery pack according to one embodiment of the present disclosure. Figs. 2 and 3 are diagrams which schematically explain the main parts of the battery pack of Fig. 1.

Referring to Figs. 1 to 3, the battery pack may include at least one battery module including at least one battery cell; and a pack case covering the at least one battery module and including a mesh structure for guiding gas discharge.

The battery cell may be formed by at least one number or a plurality of numbers, and may comprise a secondary battery. The battery cell may comprise a pouch type secondary battery, a prismatic secondary battery, or a cylindrical secondary battery.

The mesh structure may allow air to flow in and guide venting gas discharge. For this purpose, the mesh structure may be provided in both an air inflow part and a gas discharge part.

As the air smoothly flows in through the air inflow part, it is possible to prevent the decrease of cooling water injection speed and the reduction of cooling water injection amount due to the generation of a negative pressure inside the module case due to the injection of the cooling water, without inflow of air.

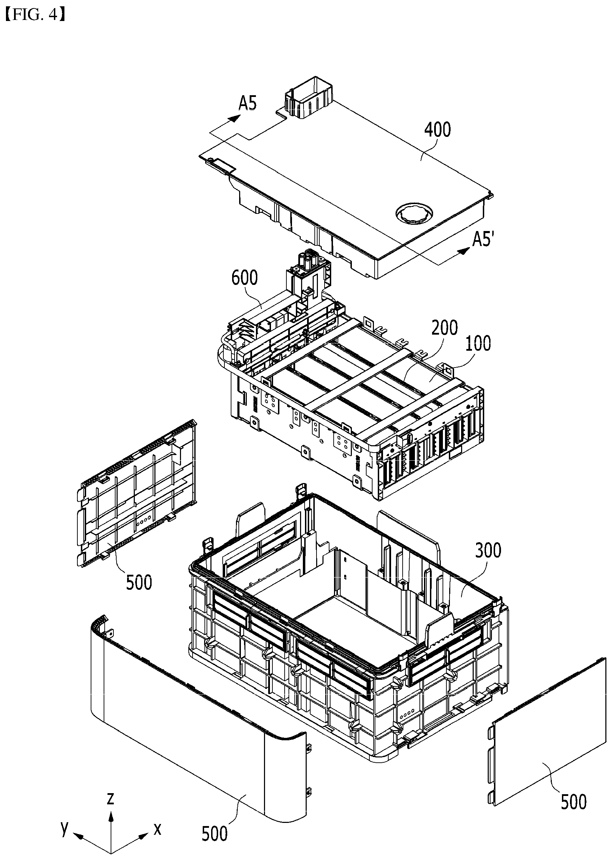

Fig. 4 is an exploded perspective view which schematically shows the configuration of a battery pack according to another embodiment of the present disclosure.

Referring to Fig. 4, the battery pack includes a cell module assembly 100, a blocking member 200, a pack case 300, a fire-fighting tank 400, an outer cover 500, and an electrical connection unit 600.

Even in Fig. 4, the cell module assembly 100 may be configured such that each of the plurality of battery cells is stacked in a form arranged along a horizontal direction (e.g., X-axis direction in the figure) in a state of being erected in the vertical direction (e.g., the Z-axis direction in the figure). At this time, the longitudinal direction of the battery cell is, for example, the Y-axis direction in the figure.

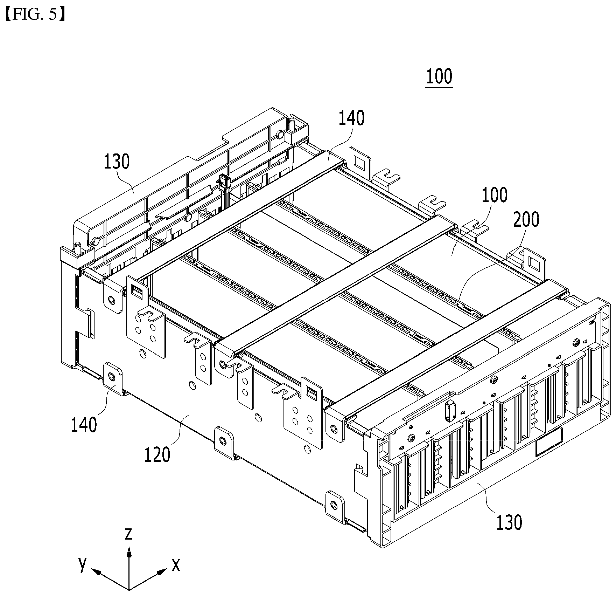

Fig. 5 is a perspective view of a cell module assembly 100 included in the battery pack of Fig. 4.

For reference, in order to more clearly show the components included in the cell module assembly 100, Fig. 5 shows the remaining components except for the plurality of battery cells. The plurality of battery cells may be conventional pouch-type battery cells or prismatic battery cells.

Referring to Fig. 5, a pair of busbar housings 130 are disposed on front and rear surfaces of a stack of the plurality of battery cells. Each of the busbar housings 130 is disposed in a direction orthogonal to the longitudinal direction of the battery cell (e.g., the X-axis direction in the figure).

A pair of end plates 120 are respectively provided at the both side ends of the stack of the plurality of battery cells. The end plate 120 is disposed in parallel with the battery cells. A pair of end plates 120 are connected between the pair of busbar housings 130, respectively.

Each of the upper and lower sides between the pair of end plates 120 may include at least one strap 140 that connects between the pair of end plates 120. The strap 140 strengthens the binding of the cell module assembly 100. More specifically, it strengthens the binding of the pair of end plates 120 and the stack of the plurality of battery cells disposed therebetween. Thereby, it is possible to prevent the stack of battery cells from being misaligned.

In addition, the description concerning the cell module assembly 100 overlaps with those described in Fig. 1, and thus, for details, refer to those described above with reference to Fig. 1.

Meanwhile, as shown in Fig. 4, a plurality of battery cells may be grouped and housed into a predetermined number. Moreover, as shown in Figs. 4 to 6, a blocking member 200 is provided between a group of a plurality (predetermined number) of battery cells and a group of a plurality (predetermined number) of adjacent battery cells.

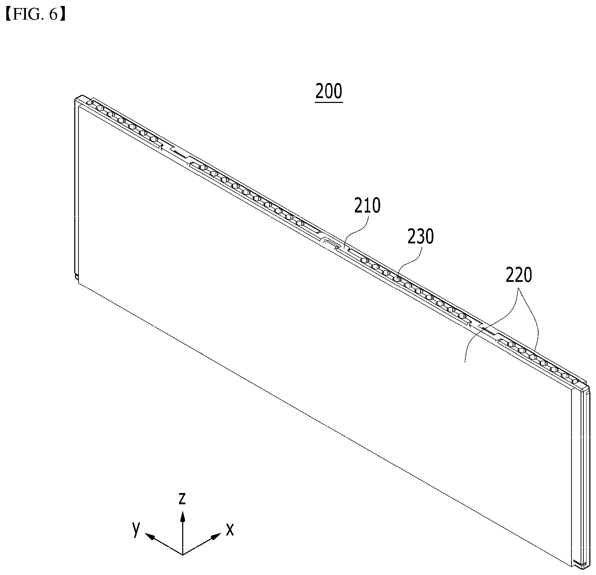

Fig. 6 is a perspective view of a blocking member 200 included in the battery pack of Fig. 4. The blocking member 200 may be configured to be interposed between adjacent battery cells to block heat. For example, when a thermal event occurs in some of the battery cells to generate heat or a high-temperature venting gas, the generated heat or gas may be suppressed or blocked from being transferred to an adjacent battery cell by the blocking member 200. **In** addition, the blocking member 200 may have the role of blocking flames or sparks ejected from a specific battery cell.

The blocking member 200 has a substantially plate-like shape. The blocking member 200 may be configured in a plate-like shape erected in the vertical direction. Moreover, the blocking member 200 may also have the height equal to or similar to that of that of the battery cell erected in the vertical direction. The height of the blocking member 200 may be smaller or larger than the height of the battery cell.

A plurality of blocking members 200 may be included in accordance with the number of battery cells. And, as described above, the blocking member 200 may constitute the cell module assembly 100 in a stacked form together with the battery cells.

According to the configuration of the embodiment of the present disclosure, in a battery pack including a plurality of battery cells, thermal runaway propagation between cells or the like can be effectively prevented by the blocking member 200.

Also, the blocking member 200 may be largely formed of a triple structure. For example, a pair of swelling pads 220 are provided on each of the both surfaces of the support plate 210. The support plate 210 maintains the shape and stiffness of the blocking member 200 and blocks flames or sparks ejected from the battery cells between the battery cells. The support plate 210 may be made of, for example, a metal material. The swelling pad 220 reduces pressure that is applied to the battery cell due to the support plate 210 during swelling of the battery cell. The swelling pad 220 may be made of, for example, a silicone material or a soft plastic material.

Meanwhile, the support plate 210 includes a plurality of through holes 230 formed by penetrating the support plate 210 in a vertical direction, and a plurality of through holes 230 are disposed along the longitudinal direction of the support plate 210.

When a fire extinguishing agent (fire extinguishing fluid) is injected into the cell module assembly 100 from the fire-fighting tank 400 located in the upper part of the cell module assembly 100, the fire extinguishing agent (fire extinguishing fluid) enters even into the plurality of through holes 230. That is, as the fire extinguishing agent (fire extinguishing fluid) stays in the plurality of through holes 230, the battery cell in which the thermal event has occurred can be more effectively cooled and extinguished.

The plurality of through holes 230 may be formed so as to be opened on both the upper surface and the lower surface of the support plate 210. Alternatively, the plurality of through holes 230 is opened only in its upper surface, and the lower surface thereof may have a clogged shape so that the fire extinguishing agent (fire extinguishing fluid) can stay in the through holes 230 longer. In the former case, if the support plate 210 of the blocking member 200 is disposed so as to be closely adhered to the inner lower surface of the pack case 300, the fire extinguishing agent (fire extinguishing fluid) may stay in the through hole 230 longer as in the latter case.

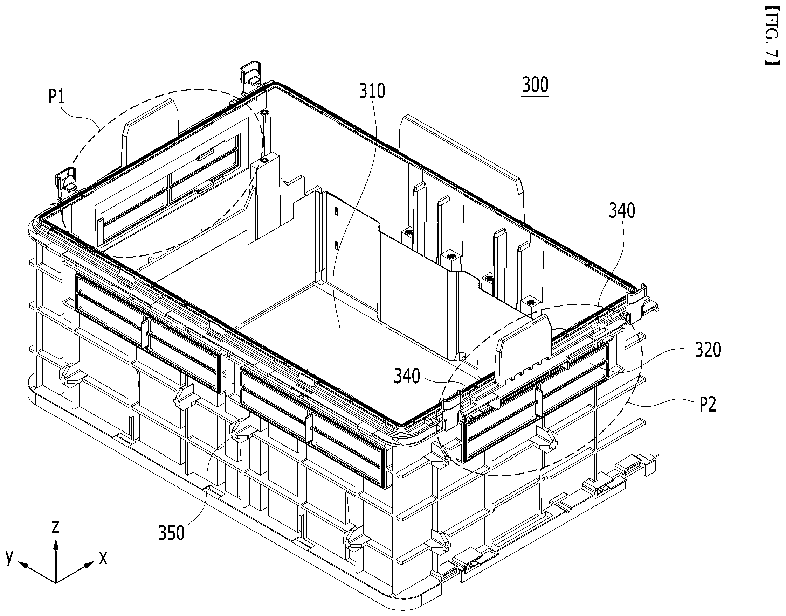

Fig. 7 is a perspective view of a pack case 300 included in the battery pack of Fig. 4. Referring to Fig. 7, the pack case 300 may be configured in a box shape. The box-shaped pack case 300 may be integrally molded, or may be manufactured in such a way that at least one surface couples to an adjacent surface.

The pack case 300 includes at least one venting hole 320. An eave may be further provided on the upper surface of the venting hole 320 so as to prevent rain or snow from entering the inside of the pack case 300 via the venting hole 320. A detachable filter 360 is mounted on the venting hole 320.

In addition, partition walls 330 having a structure that protrudes and extends outward from the outer surface of the pack case 300 are provided. Further, the pack case 300 includes a fastening member 340 capable of coupling the outer cover 500, and the pack case 300 includes a spacer 350 that protrudes from the outer surface. The partition wall 330, the fastening member 340, and the spacer 350 will be described in detail, similarly to the description of the outer cover 500, which will be described later.

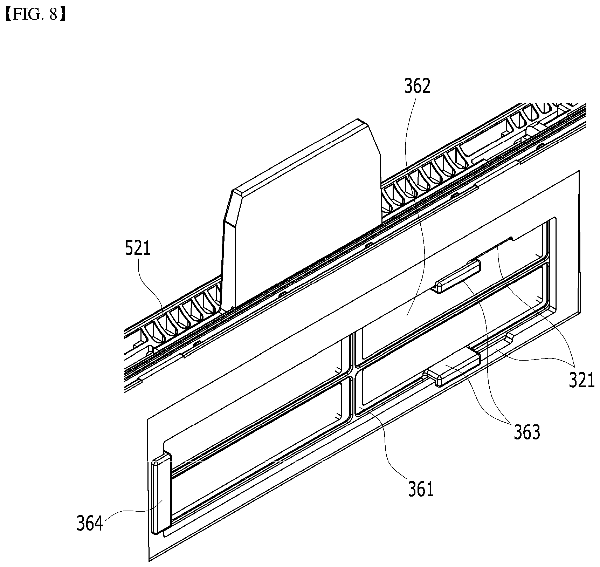

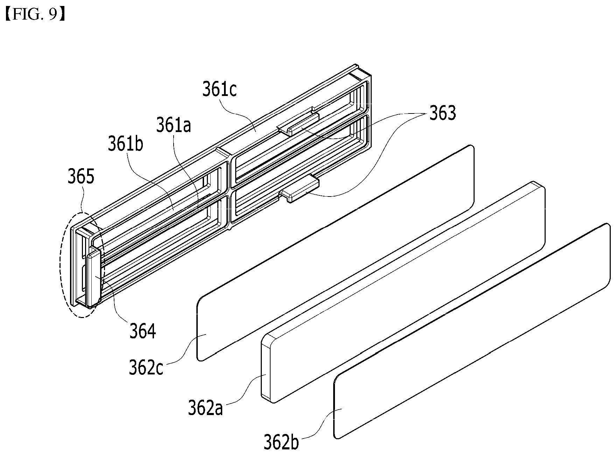

Fig. 8 is a partially enlarged view of a portion indicated by **P1** in Fig. 7. Fig. 8 shows a case where the filter 360 is viewed from the inside of the pack case 300. Fig. 9 is an exploded perspective view of the filter 360 of Fig. 8.

First, the filter 360 includes a filter frame 361 and a filter part 362. The filter frame 361 supports the filter part 362. The filter frame 361 may house the filter part 362 therein, and the filter part 362 is detachable from the filter frame 361.

The filter frame 361 is largely composed of a first filter frame member 361a forming a front surface of the filter frame 361 (i.e., the side facing the inside of the pack case 300) and a second filter frame member 361b forming a rear surface of the filter frame 361 (i.e., the side facing the outside of the pack case 300). The first filter frame member 361a and the second filter frame member 361b are separated by a predetermined distance. Also, a third filter frame member 361c connects the edges of the first filter frame member 361a and the second filter frame member 361b. A filter part 362 may be disposed between the first filter frame member 361a and the second filter frame member 361b.

The filter frame 361 includes openings on at least three sides. That is, the front surface (i.e., the surface facing the inside of the pack case 300) and the rear surface (i.e., the surface facing the outside of the pack case 300) of the filter frame 361 have openings so that the filter part 362 is exposed.

Further, one of the side surfaces connecting the front surface and the rear surface of the filter frame 361 (i.e., the third filter frame member 361c) has an opening 365 so that the filter part 362 can be detached from the filter frame 361. One filter part 362 may be detached from the filter frame 361via the opening 365.

The filter part 362 can filter so as to prevent sparks or flames from being emitted to the outside when a thermal event occurs in the battery cell, and to prevent foreign substances from flowing into the inside of the pack case 300 from the outside. The filter part 362 may be made of a material having a melting point higher than a predetermined range so as not to be damaged by emitted gas, flame, and heat. For example, the melting point of a material used to manufacture the filter part 362 may be 300°C or more.

Referring to Fig. 9, the filter part 362 may be formed into a multiple structure, and may include, for example, a first filter member 362a, a second filter member 362b, and a third filter member 362c. The second filter member 362b and the third filter member 362c may be coupled to both surfaces of the first filter member 362a (inside and outside of the pack case 300) with the first filter member 362a as a center.

For example, the first filter member 362a may be made from a material having heat dissipation performance. For example, the filter part 362 may be made from silicon. Alternatively, the first filter member 362a may be made from a flame retardant material. For example, the filter part 362 includes incombustible plastics, GFRP (glass fiber reinforced plastics), and CFRP (carbon fiber reinforced plastics), and may be provided into a sheet or a net.

For example, the second filter member 362b and the third filter member 362c may be made from metal. For example, the filter part 362 may be provided into a metal sheet or a metal mesh. More specifically, for example, it may have a lattice-like or wave-like mesh structure. Further, in some cases, the third filter member 362c located outside the pack case 300 may have a finer mesh structure than the second filter member 362b located inside the pack case 300. That is, when a thermal event occurs in the battery cell, the venting gas that has sequentially passed through the second filter member 362b and the first filter member 362a passes through the third filter member 362c that is finer than the second filter member 362b, so that fine substances can be filtered without missing until the end.

In some cases, the filter part 362 may include a material having fire extinguishing performance. For example, the filter part 362 may contain a fire extinguishing agent. The fire extinguishing agent can generate carbon dioxide and water vapor through a thermal decomposition reaction when the battery cell is ignited inside, and the generated carbon dioxide and water vapor prevent external oxygen from flowing into the inside of the pack case 300, thereby capable of suppressing flames. The fire extinguishing agent can absorb the heat generated in the battery pack by performing a thermal decomposition reaction, which is an endothermic reaction, and can also block the external oxygen supply by generating carbon dioxide and water vapor. For example, the filter part 362 may include one or more fire extinguishing agents selected from the group consisting of inorganic carbonates, inorganic phosphates, and inorganic sulfates. More specific examples of the fire extinguishing agent material may be sodium bicarbonate(NaHCO3), potassium hydrogen carbonate(KHCO₃), ammonium phosphate(NH₄H₂PO₃), a mixture of potassium hydrogen carbonate(KHCO₃) and urea((NH₂)₂CO), and the like.

Here, the filter part 362 is provided as a mesh made of metal, plastic, or the like, and may be provided so that the pores of the mesh are filled with the fire extinguishing agent, but this is not necessarily the case. Alternatively, the first filter member 362a may contain a fire extinguishing agent.

Since the physical properties of the filter part 362 are not limited by the above-described illustrative embodiments, the filter part 362 may be made of a material different from the above. In this embodiment, the filter part 362 should be construed as including all materials and shapes that can be provided as a fire extinguishing mesh.

Meanwhile, as described above, the filter 360 is also detachable from the venting hole 320. First, the size of the filter frame 361 of the filter 360 may be equal to or larger than that of the venting hole 320. The edge of the filter frame 361 is disposed along the edge of the venting hole 320, but the filter 360 is disposed in contact with the outside of the pack case 300, and a locking ring 363 may attach the filter 360 to the venting hole 320 in such a way that it is disposed inside the pack case 300.

More specifically, referring to Fig. 8, the filter 360 includes locking rings 363 at each of both opposite ends of the filter 360 (upper and lower ends in the example of Fig. 8). The locking ring 363 may be, for example, L-shaped or U-shaped bracket shape. The locking ring 363 is caught on the edge of the venting hole 320, and may be mounted on the venting hole 320. Further, the edge of the venting hole 320 includes a concave part 321 at a position corresponding to the locking ring 363. The size and shape of the concave part 321 approximately matches with the size and shape of the largest one surface of the locking ring 363.

The locking ring 363 of the filter 360 may be inserted from the outside to the inside of the pack case 300 through the concave part 321. That is, the filter 360 is positioned on the venting hole 320 from the outside of the pack case 300, and the position of the locking ring 363 of the filter 360 matches with the concave part 321 at the edge of the venting hole 320, and then the locking ring 363 is pushed inside the pack case 300. When the filter 360 contacts the venting hole 320, the filter 360 is pushed in a sliding manner and mounted on the venting hole 320. That is, the locking ring 363 of the filter 360 is slid along the edge including the concave part 321 of the venting hole 320, so that a filter 360 is mounted. The width of the venting hole 320 is greater than the width of the filter 360 by S.

**In** addition, the filter 360 may further include a stopper 364 on at least one of ends connecting the both opposite ends (side end in an illustrative embodiment of Fig. 8). When the filter 360 is slid in a sliding manner, the stopper 364 is caught on one edge of the venting hole 320, so that the filter 360 moves only a distance of S, and moves more than that distance, thereby preventing separation from the venting hole 320. Further, the filter 360 can be mounted to the venting hole 320 more firmly. The stopper 364 includes a convex part that protrudes toward the inside of the pack case 300. The stopper 364 having the shape of a convex part abuts on one edge of the venting hole 320 to stop the sliding of the filter 360. For example, as shown in Figs. 8 and 9, it may be a convex part but may include a ring shape. When the stopper 364 is formed of an **L-**shaped or U-shaped bracket or ring shape as an example, the filter 360 can be more firmly mounted to the venting hole 320.

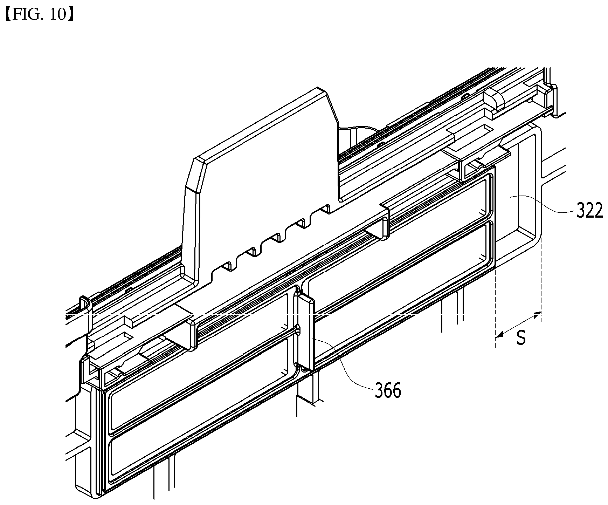

Fig. 10 is a partially enlarged view of a portion indicated by P2 in Fig. 7. Fig. 10 shows a case where the filter 360 is viewed from the outside of the pack case 300. When removing the filter 360 from the venting hole 320, it is sufficient to proceed in the opposite direction to those described above. Fig. 10 shows a case where the mounting of the filter 360 is completed by closing in a sliding manner, and the auxiliary plate 322 corresponding to the spare space having a width of S in the venting holes 320 is not opened but is blocked. Meanwhile, the filter 360 may include a handle 366 to promote detachment of the filter 360 and movement in a sliding manner.

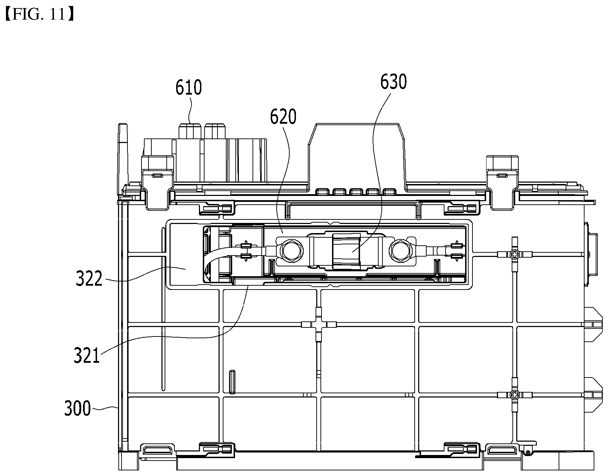

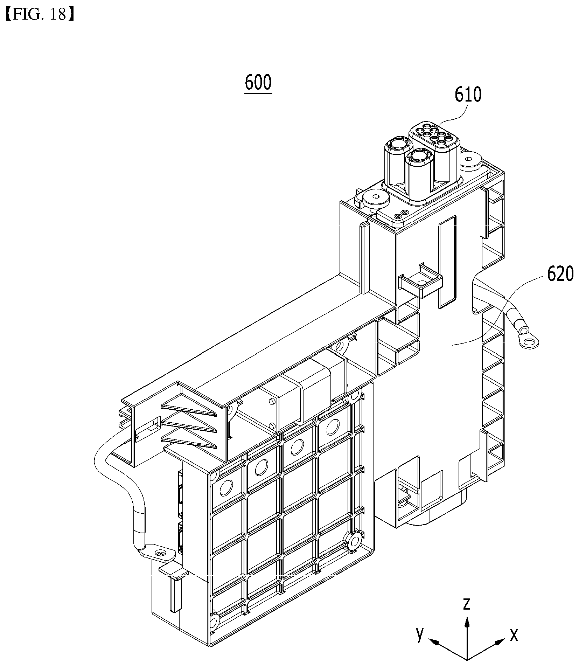

Fig. 11 shows a case where the filter 360 is removed from the pack case 300. More specifically, it shows a case where the filter located at P1 in Fig. 7 is removed. In addition, a case in which the electrical connection unit 600 described later is housed inside the pack case 300 is simultaneously shown. As described above with reference to Figs. 8 to 10, the filter 360 is mounted on the venting hole 320, so that the venting gas is filtered when a thermal event occurs in the battery cell. Meanwhile, as shown in Fig. 11, when trying to maintain and manage the electrical connection unit 600 in normal times, the filter 360 is removed from the venting hole 320, so that the electrical connection unit 600 can be maintained and managed through the opened venting hole 320. That is, various components of the electrical connection unit 600 may be inspected, repaired, or replaced. For example, when maintenance or replacement of various cables provided in the electrical connection unit 600 and the fuse 630 electrically connected thereto or various electrical parts is required, the filter 360 may be removed from the venting hole 320 and then mounted again. For a description of the other electrical connection unit 600, refer to the description of Fig. 18, which will be described later.

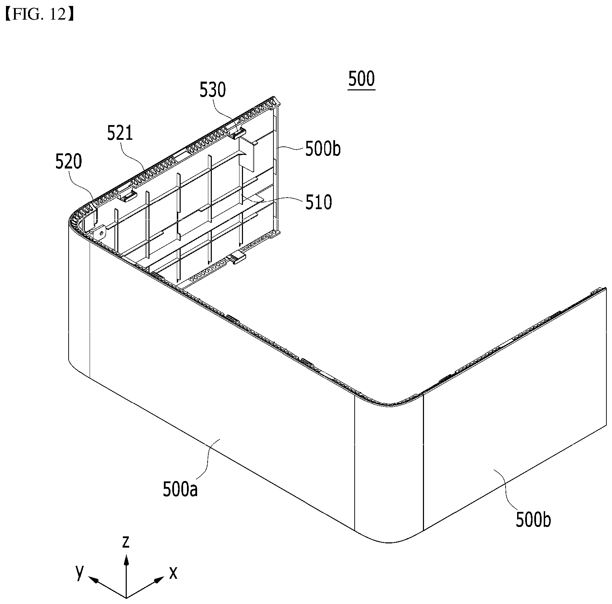

Fig. 12 is a perspective view of an outer cover 500 included in the battery pack of Fig. 4.

The outer cover 500 is coupled to the pack case 300 to cover at least one surface of the pack case 300. Fig. 12 shows the case where the front surface and both side surfaces of the pack case 300 are covered. The front cover 500a of the outer cover 500 covers the front surface of the pack case 300, and a pair of side covers 500b of the outer cover 500 covers both side surfaces of the pack case 300.

Further, the outer cover 500 covers the venting hole 320 at a position spaced apart from the venting hole 320 of the pack case 300 by a predetermined distance. Accordingly, the front surface of the battery cell in the pack case 300 is prevented from being directly exposed to the outside through the venting hole 320.

In the pack case 300 of Fig. 7, for example, venting holes 320 are provided on the front surface and both side surfaces of the pack case 300, respectively. Thereby, the outer cover 500 is also provided to cover the front surface and both side surfaces of the pack case 300.

Meanwhile, the present disclosure is not limited to those described above, and it is sufficient if the outer cover 500 can cover the venting hole 320. For example, all four sides of the front surface, rear surface and both side surfaces of the pack case 300 can also be covered, and various modifications and changes are possible, such as covering only a part of the four surfaces except for the upper and lower surfaces of the pack case 300.

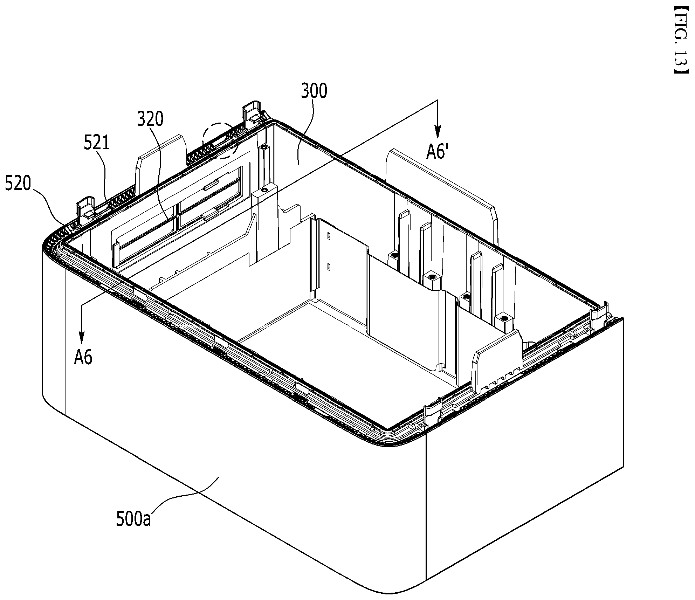

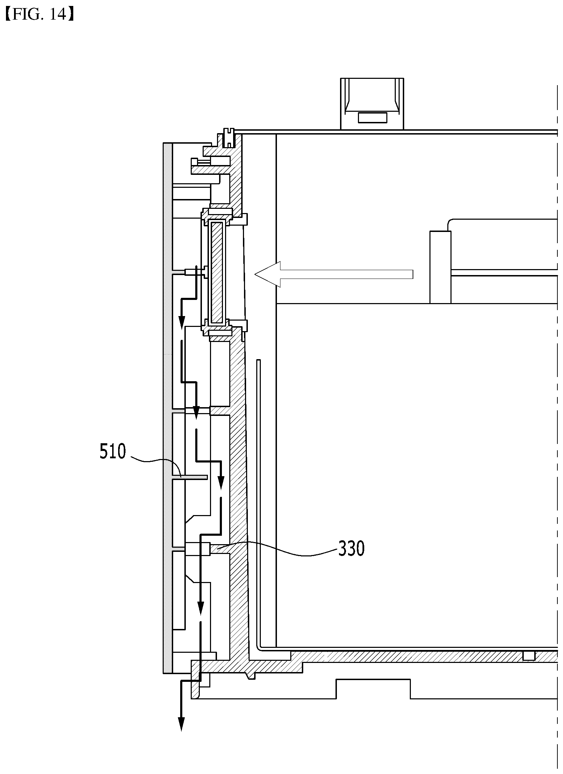

Fig. 13 is a perspective view when an outer cover 500 is coupled to a pack case 300. Fig. 14 shows the flow of venting gas in a cross section along line A6-A6' in Fig. 13. When a thermal event occurs in the battery cell housed inside the pack case 300, venting gas generated from the corresponding battery cell can be discharged through the venting hole 320. Venting gas discharged from the venting hole 320 may move through a venting flow path formed in a space between the pack case 300 and the outer cover 500 and then be discharged to the outside of the outer cover 500. At this time, the venting gas moving through the venting flow path is discharged to the outside through an open space between the outer cover 500 and the pack case 300 formed at the end of the outer cover 500 (upper and lower ends of the outer cover 500 in the case of Fig. 13).

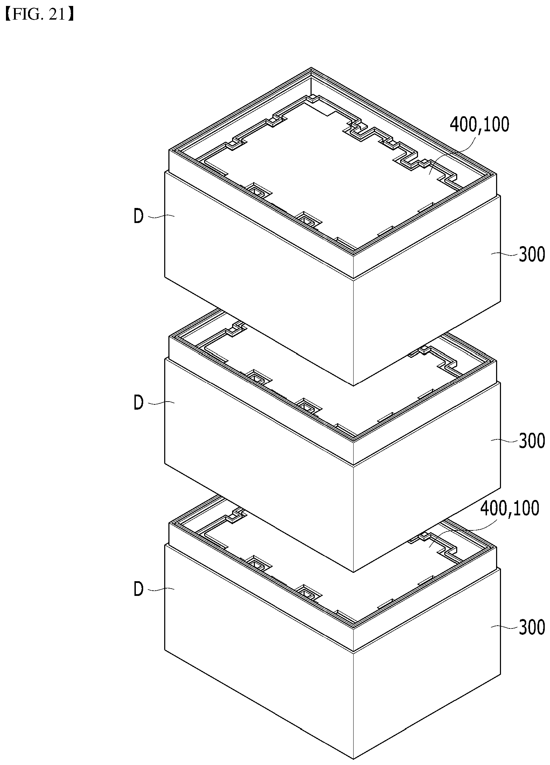

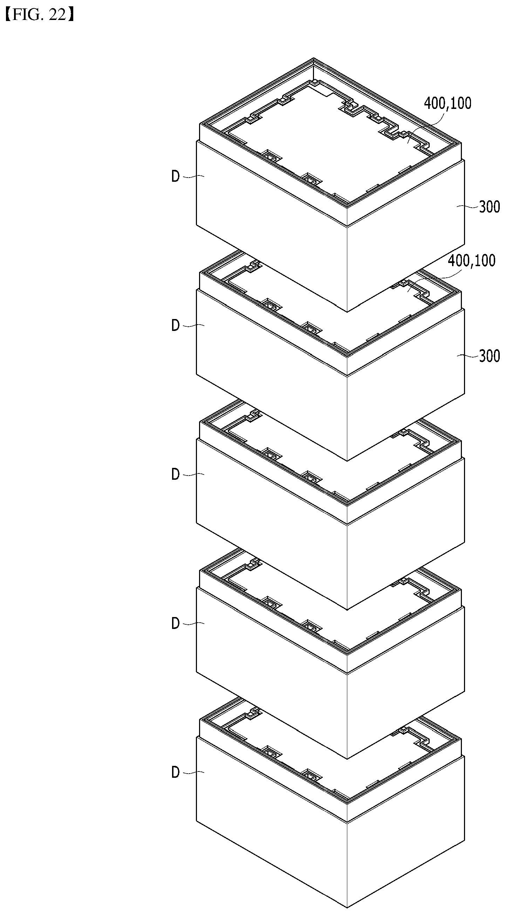

For reference, as described later in Figs. 21 and 22, in case where a plurality of battery packs are stacked, if the height of the outer cover 500 is slightly smaller than the height of the pack case 300, an open space between the pack case 300 and the outer cover 500 can be secured at an upper end and a lower end of each battery pack. That is, even if a plurality of battery packs are stacked in the vertical direction, an open space between the pack case 300 and the outer cover 500 is secured for each battery pack, so that venting gas can be smoothly discharged to the outside.

Referring to Fig. 7 again, the outer surface of the pack case 300 is provided with partition walls 330 having a structure that protrudes and extends outward from the outer surface.

As shown in Fig. 14, due to the partition wall 330, the movement distance of the venting gas in the venting flow path is increased, and the flame included in the venting gas is naturally extinguished (naturally fire-extinguished) while colliding with the partition wall 330. Thereby, the flame included in the venting gas is not discharged to the outside of the outer cover 500.

The partition walls 330 are formed on the outer surface of the pack case 300 in at least one direction. The embodiment of Fig. 7 shows a case where the partition walls 330 are formed along the horizontal direction (the width direction and/or the width direction of the pack case 300) and the vertical direction (the height direction of the pack case 300), and the partition walls 330 in the horizontal direction and the partition walls 330 in the vertical direction intersect. However, the present disclosure is not limited to those illustrated, it is sufficient if the partition walls 330 are formed to intersect the moving path of the venting gas.

Meanwhile, due to the partition wall 330, the stiffness of the pack case 300 can also be reinforced.

Referring to Fig. 12 again, the front cover 500a and the pair of side covers 500b of the outer cover 500 may be integrally formed, but they can also be separately manufactured , and coupled to each other.

In addition, each open space between the pack case 300 and the outer cover 500 (the upper and lower sides of the outer cover 500 in an illustrative embodiment of Fig. 13) includes eaves 520 having a shape that projects and extends from the main body of the outer cover 500 toward the pack case 300. By further including the eaves 520, the function of covering the venting hole 320 can be further enhanced. The eaves 520 may have a width equal to that of the separation space between the outer cover 500 and the pack case 300, or may have a smaller width than that.

Further, the outer cover 500 is coupled to the outer surface of the pack case 300 by a predetermined distance, whereby as described above, the venting gas discharged from the venting hole 320 of the pack case 300 moves through the venting flow path formed in the space between the pack case 300 and the outer cover 500, and then can be discharged to the outside of the outer cover 500.

The eaves 520 are provided with a plurality of venting holes 521 arranged in a line along the eaves 520. The venting gas that has moved through the venting flow path formed in the space between the pack case 300 and the outer cover 500 may be discharged through the venting hole 521 of the outer cover 500.

Meanwhile, partition walls 510 formed in at least one direction may be provided on a surface of the main body of the outer cover 500 facing the pack case 300. Due to the partition wall 510, the moving distance of the venting gas in the venting flow path is increased, and the flame included in the venting gas is naturally extinguished while colliding with the partition wall 510. Thereby, the flame included in the venting gas is not discharged to the outside of the outer cover 500.

The partition walls 510 are formed on the outer surface of the outer cover 500 in at least one direction. The embodiment of Fig. 14 illustrates a case where partition walls 510 are formed along the horizontal direction (the width direction and/or the width direction of the outer cover 500) and the vertical direction (the height direction of the outer cover 500), respectively, and the partition walls 510 in the horizontal direction and the partition walls 510 in the vertical direction intersect. However, the present disclosure is not limited thereto, and it is sufficient if the partition walls 510 are formed so as to intersect the moving path of the venting gas.

Meanwhile, due to the partition wall 510, the stiffness of the outer cover 500 can also be reinforced.

The outer cover 500 further includes a fastening member 530. It may be coupled to the fastening member 340 of the pack case 300. The embodiment of Fig. 13 illustrates a case where the fastening member 530 of the protruding ring-shaped outer cover 500 is coupled to the fastening member 340 of the pack case 300 having the shape of an insertion groove. Meanwhile, in the present disclosure, the method of coupling the outer cover 500 and the pack case 300 is not limited to those illustrated, and can be embodied through modifications and alterations in various ways.

Further, referring to Fig. 7, the pack case 300 may include a spacer 350 protruding from an outer surface. The spacer 350 protrudes by the separation distance between the pack case 300 and the outer cover 500. That is, the spacer 350 may contact the inner surface of the outer cover 500. Thereby, the spacer 350 can maintain a predetermined distance between the pack case 300 and the outer cover 500. In particular, even if the outer cover 500 receives an impact from the outside, the outer cover 500 is prevented from being bent toward the pack case 300 and thus narrowing the venting flow path between the pack case 300 and the outer cover 500.

Further, the protruding distance of the spacer 350 is greater than the protruding distance of the partition wall 330 of the pack case 300. Similarly, the protruding distance of the spacer 350 is greater than the protruding distance of the partition wall 510 of the outer cover 500. Thereby, when the venting gas moves in the space between the pack case 300 and the outer cover 500, it is prevented from being blocked by the partition wall 330 of the pack case 300 and the partition wall 510 of the outer cover 500. When a plurality of spacers 350 are provided, the plurality of spacers 350 are spaced apart from each other so as not to block the venting flow path.

The spacer 350 may have a cross shape, for example, as shown in Fig. 7, but the present disclosure is not limited thereto. It is sufficient to maintain the separation space between the pack case 300 and the outer cover 500, but the outer cover 500 has a shape configured so as to maintain its stiffness.

Furthermore, the outer surface of the pack case 300 is covered with the outer cover 500, so that an aesthetic function can be imparted to the appearance of the battery pack.

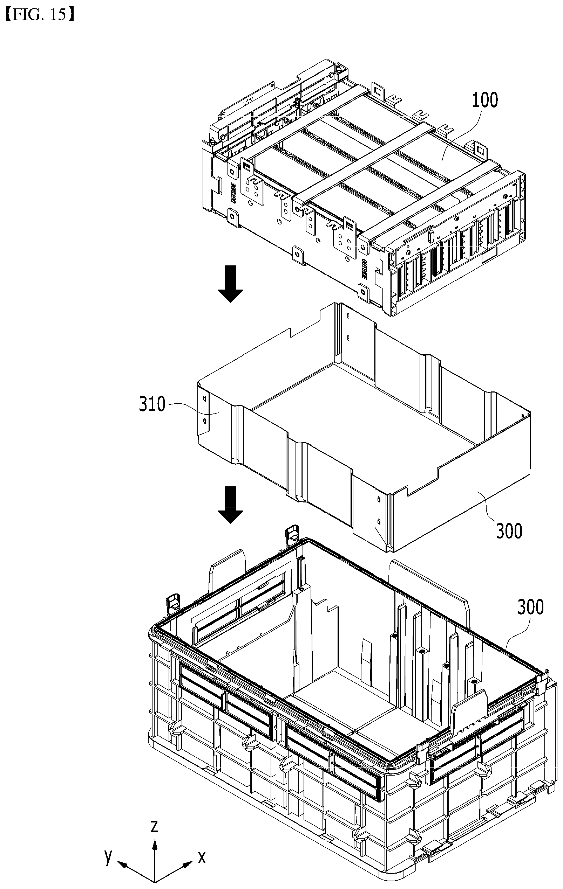

Meanwhile, as shown in Fig. 15, the cell module assembly 100 shown in Fig. 5 may be housed in the inner space of the auxiliary case 310 and then mounted on the pack case 300. The cell module assembly 100 is primarily housed in the inner space of the auxiliary case 310 and then finally housed in the pack case 300, thereby being able to supplement the stiffness of the cell module assembly 100 and prevent misalignment of the stack of the plurality of battery cells in the cell module assembly 100. The auxiliary case 310 may be made of, for example, metal, stainless steel, or the like.

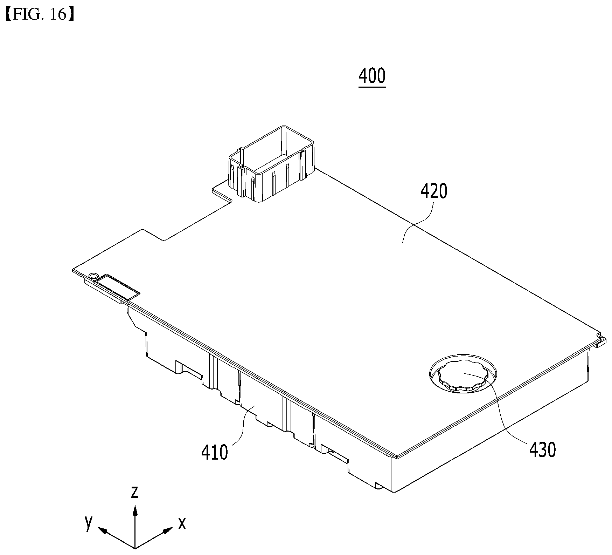

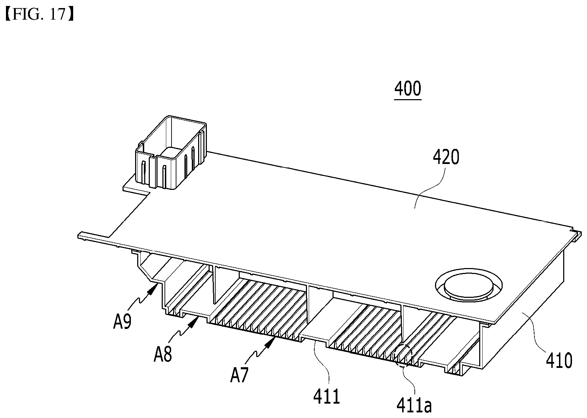

Fig. 16 is a perspective view of a fire-fighting tank 400 included in the battery pack of Fig. 4. Fig. 17 is a perspective cross-sectional view of the fire-fighting tank 400 of Fig. 16 and shows a cross section taken along line A5-A5' in Fig. 4. As described above in Fig. 1, the fire-fighting tank 400 includes a lower coolant tank 410 and an upper coolant tank cover 420. The lower coolant tank 410 and the upper coolant tank cover 420 may be separately manufactured, and hermetically coupled, or may be integrally manufactured. The upper coolant tank cover 420 may further include an inlet port 430 capable of injecting a fire extinguishing agent. The inlet port 430 may be closed with a stopper to seal the fire-fighting tank 400.

A portion of the base plate 411 of the lower coolant tank 410 where the thickness is thinly formed can function as a fragile part 411a. That is, when a thermal event occurs in the battery cell of the cell module assembly 100, this fragile part 411a where the thickness is relatively thin may be broken first. When the fragile part 411a is broken to form an opening in a base plate 411, the fire extinguishing agent stored inside the fire-fighting tank 400 may be discharged toward the cell module assembly 100 through the corresponding fragile part 411a.

A plurality of fragile parts 411a may be provided. The fragile part 411a may have, for example, a shape in which the width is narrow and the length is long. That is, it may have a linear shape, which is a straight-line shape arranged in parallel to one end of the fire-fighting tank 400, and the fragile parts 411a may be arranged in parallel to each other.

Meanwhile, according to the embodiment of Fig. 16, the longitudinal direction of the battery cell (e.g., the X-axis direction in the figure) and the longitudinal direction of the fragile part 411a (e.g., the X-axis direction in the figure) may be orthogonal to each other. That is, the plurality of fragile parts 411a are disposed to intersect the longitudinal direction of the corresponding battery cell. Thereby, along the longitudinal direction of the battery cell where the thermal event has occurred, the fire extinguishing agent can be supplied all at once through the plurality of opened fragile parts 411a throughout the battery cell, and the battery cell in which the thermal event has occurred can be more efficiently and quickly extinguished.

Further, referring to Fig. 17, the base plate 411 of the lower coolant tank 410 has a step difference. More specifically, the base plate 411 is largely classified as follows. It consists of a part A7 where the fragile part 411a is located, a part A8 that abuts on the strap 140 of the pack case 300, and a part A9 located on the side of the electrical connection unit 600. Among them, the height of the base plate 411 at the part A7 where the fragile part 411a is located is the lowest.

The fragile part 411a of the lower coolant tank 410 is arranged most adjacently to the battery cell as much as possible. Thereby, when overheating or ignition situation has occurred in some battery cells, it is possible to perform prompt initial suppression, thereby more effectively preventing the occurrence of a dangerous situation such as a secondary explosion due to the transfer of heat or flame to adjacent battery cells.

In other words, as shown in Fig. 5 with respect to the cell module assembly 100, the height of the cell module assembly 100 is not constant due to the portion where the strap 140 is located or the portion where the busbar housing 130 is located (connector 610, fuse, etc. are located outside the busbar housing 130), or the like. Regardless of this, if the height of the base plate 411 of the lower coolant tank 410 of the fire-fighting tank 400 is constant as a whole, an empty space is relatively created between the base plate 411 of the fire-fighting tank 400 and the upper surface of the cell module assembly 100. In such a case, heat transfer from the battery cell whose temperature has risen to the fragile part 411a is hindered by the empty space, so that the fire extinguishment is delayed with just that. When the battery cell overheats, the fragile part 411a is disposed in close proximity to the battery cell whose temperature has risen, so that the fragile part 411a is immediately broken, and the battery cell can be quickly cooled and extinguished.

In summary, the lower surface of the base plate 411 of the fire-fighting tank 400 and the upper surface of the cell module assembly 100 have shapes that generally coincide with each other. Thereby, since the fire-fighting tank 400 is arranged in closer contact with the cell module assembly 100, thereby capable of more effectively cooling the battery cell with a temperature rise, and more quickly injecting a fire extinguishing agent into the battery cell where overheating or ignition occurs. In addition, it is possible to efficiently house fire extinguishing agents in the fire-fighting tank 400. That is, if the height of the base plate 411 of the lower coolant tank 410 of the fire-fighting tank 400 is constant as a whole, the fire-fighting tank 400 houses a fire extinguishing agent as little as the corresponding empty space.

The fire extinguishing agent provided in the fire-fighting tank 400 may be, for example, in the form of fire extinguishing fluid, and redundant descriptions are omitted. For details, refer to those described above.

Fig. 18 is a perspective view of an electrical connection unit 600 that is a component for electrically connecting a battery pack. The electrical connection unit 600 includes components such as a connector 610 that performs an electrical connection function, a connector housing 620, various cables, and a fuse 630, between the battery packs stacked one above the other and between the battery pack and the battery management system (BMS). The electrical connection unit 600 is housed inside the pack case 300 and disposed on the front surface of the cell module assembly 100. A partition plate is provided inside the pack case 300, and based this, that the electrical connection unit 600 and the cell module assembly 100 can be partitioned and housed inside the pack case 300. The connector 610 includes a power connector that transmits power and a signal connector that transmits signals for monitoring and managing the battery pack, between battery packs and between battery pack and the battery management system (BMS).

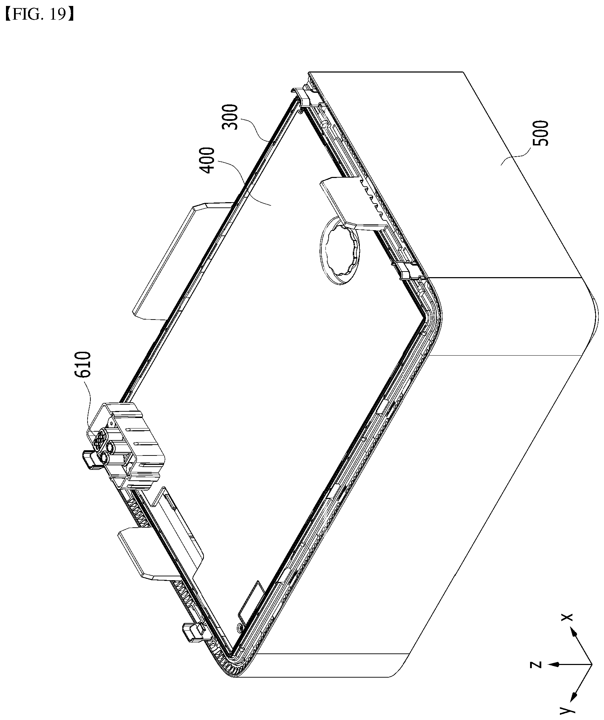

Fig. 19 is a perspective view of a battery pack in which all components of the battery pack described above with reference to Figs. 4 to 17 are combined.

In addition, for parts where the description concerning the battery pack of Figs. 4 to 19 overlaps with the description concerning the battery pack of Figs. 1 to 3, refer to those described above in Figs. 1 to 3.

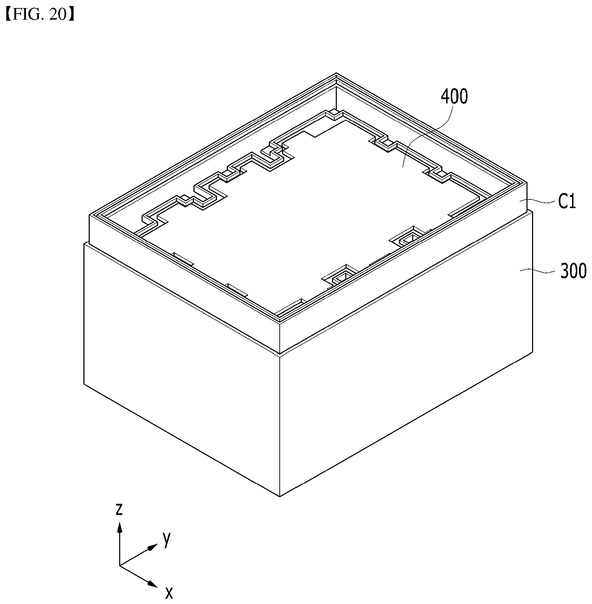

Meanwhile, a plurality of the pack cases 300 may be provided, and configured to be stacked in the vertical direction. This will be described in more detail with reference to Fig. 20.

Fig. 20 is a perspective view which schematically shows at least a part of the configuration of the battery pack of Figs. 1 to 19 of the present disclosure. Also, Figs. 21 and 22 are diagrams showing an embodiment in which the pack cases 300 shown in Fig. 20 are stacked in a plurality of number.

Referring to Fig. 20, the pack case 300 may include a bottom part and a side wall part. The cell module assembly 100 can be housed in the inner space of the pack case 300, and the upper surface of the cell module assembly 100 is covered with the fire-fighting tank 400 to form a battery pack. For reference, in Fig. 20, the height of the upper side of the pack case 300 is shown to be greater than the height of the upper surface of the fire-fighting tank 400. However, Fig. 20 is merely a schematic diagram and one exemplary embodiment, and the present disclosure is not limited to those shown in Fig. 20. That is, conversely, various modifications and changes can be made, for example, the height of the upper surface of the fire-fighting tank 400 may be greater than the height of the upper side of the pack case 300, and the height of the upper surface of the fire-fighting tank 400 and the height of the upper side of the pack case 300 may be equal.

The pack case 300 as shown in Fig. 20 may be formed by a plurality of numbers, so that a stacked structure of battery packs may be formed as shown in Fig. 21 or 22. At this time, the battery pack of Fig. 20 may be one unit pack. In addition, as such unit packs are formed by a plurality of numbers, an entire battery pack of module stacking type as shown in Fig. 21 or 22 may be configured.

More specifically, for example, in the configuration of Fig. 21, a shape in which three unit packs D are stacked in the vertical direction is illustrated. And, in the configuration of Fig. 22, a shape in which five unit packs D are stacked in the vertical direction is illustrated. The present disclosure is not limited to those illustrated, and may be realized by changing the number of unit packs D in various ways to suit the environment in which the invention is realized.

For example, if the battery pack of the present disclosure is realized as an energy storage system (ESS), the number of unit battery packs is adjusted, so that a voltage range and/or electric storage capacity of the energy storage device can be realized to suit its environment. According to such a configuration of embodiment of the present disclosure, a single unit pack having a common structure is stacked in various ways, which makes it possible to cope with products of various voltage ranges in accordance with the stacking number. For example, by adjusting the stacking number of the same unit pack, low-pressure products as shown in Fig. 21, or high-voltage products as shown in Fig. 22 can be realized. Therefore, it is possible to improve economic efficiency or compatibility compared to products limited only to the standards of a specific voltage range. In addition, according to such a configuration of embodiment, products with various capacities can be realized according to the stacking number.

In other words, if the unit packs to be stacked are connected in series, products of various voltage ranges can be realized according to the stacking number. Further, when the unit packs to be stacked are connected in parallel, products with various capacities (electric storage capacities) can be realized according to the stacking number.

In particular, each unit pack D may have a cell module assembly 100 therein. In addition, each unit pack D includes a connector 610 so as to electrically connect each cell module assembly 100 to each other during stacking, as described above. In particular, these connectors 610 may be configured to be coupled to each other due to the upper and lower stacking of each unit pack D.

Moreover, in such a configuration of embodiment, the fire-fighting tank 400 may be housed together with the cell module assembly 100 in each unit pack D. That is, each unit pack D includes the fire-fighting tank 400 on the upper part of the cell module assembly 100 as described above. The plurality of stacked battery packs have a stacked structure of fire-fighting tank 400 - cell module assembly 100 - fire-fighting tank 400 - cell module assembly 100 from top to bottom. The stacked battery pack of the present disclosure having such a structure allows the battery pack to be configured by increasing (extending) the number of cell module assemblies 100 in order to increase various voltage ranges and/or electric storage capacities, and also can safely cope with thermal event such as fire of the cell module assembly 100. Therefore, according to this embodiment of the present disclosure, the safety of the battery pack can be further improved.

In another example of a coupling method between vertically stacked battery packs (pack case 300), referring to Fig. 20 again, details are as follows. At the upper end of the side wall part of the pack case 300, there may be a step difference formed concavely inward, such as the step part C1 for coupling. For example, the thickness of the side wall part of the pack case 300 becomes a thin part. In addition, although not shown in Fig. 20, a concave part for coupling may be formed at the bottom part of the pack case 300 so that the step part C1 for coupling of the side wall part is inserted. That is, when stacking mutually different pack cases 300 in the vertical direction, the pack case 300 may be configured such that the coupling step part C1 formed on the upper side of the side wall part of the lower layer pack case 300 is inserted into the coupling concave part formed on the bottom part of the upper layer pack case 300. Thereby, when the plurality of pack cases 300 are stacked and coupled in the vertical direction, the outer surface of the pack case 300 may have a flat shape as a whole.

Meanwhile, a coupling method for a fastening structure between vertically stacked battery packs is not limited to those shown in Figs. 20 and/or 7, and other various coupling methods can be modified or changed, and thus applied to the present disclosure.

In addition, the battery packs of the present disclosure can be connected to a battery management system (BMS, not shown). The battery management system monitors and manages the battery pack(s). The battery management system may be located on the uppermost layer of the battery packs stacked vertically. However, the location of the battery management system is not limited to the above, and can be variously modified or changed according to the method or environment in which the invention is realized.

The battery pack according to the present invention may further include various other components included in the battery pack in addition to the above-described components. For example, the battery pack according to the present disclosure may include various electrical components for controlling or managing charge and discharge of the battery pack, such as a battery management system (BMS), a relay, a fuse, and a current sensor.

According to embodiments of the present disclosure, a battery pack that significantly reduces the risk of explosion of the pack case in an abnormal situation and effectively injects cooling water into the pack case by preventing negative pressure, and an energy storage device including the same can be provided. In addition, a battery pack designed to promote maintenance and management of the battery pack in normal times and an energy storage device including the battery pack can be provided.

### [Description of Reference Numerals]

100: cell module assembly
120: end plate
130: busbar housing
140: strap
200: blocking member
210: support plate
220: swelling pad
230: through hole
300: pack case
310: auxiliary case
320: venting hole
321: concave part
322 auxiliary plate
330: partition wall
340: fastening member
350: spacer
360: filter
361: filter frame
361a: first filter frame member
361b: second filter frame member
361c: third filter frame member
362: filter part
362a: first filter member
362b: second filter member
362c: third filter member
363: locking ring
364: stopper
365: opening
366: handle
400: fire-fighting tank
410: lower coolant tank
411: base plate
411a: fragile part
420: upper coolant tank cover
430: inlet port
500: outer cover
500a: front cover
500b: side cover
510: partition wall
520: eave
521: venting hole
530: fastening member
600: electrical connection unit
610: connector
620: connector housing
630: fuse

## Claims

1. A battery pack comprising:
a cell module assembly (100) including a battery cell stack in which a plurality of battery cells are stacked;
a pack case (300) housing the cell module assembly (100) and including a venting hole (320) on at least one surface;
a filter (360) disposed in the venting hole (320) and configured to be detachable,
wherein the filter (360):
is mounted on the venting hole (320) to filter venting gas when a thermal event occurs in the battery cell, and
can be removed from the venting hole (320) so as to promote maintenance and repair of the inside of the battery pack in normal times, and
an electrical connection unit (600) housed inside the pack case (300) and disposed on one surface of the cell module assembly (100),
**characterized in that** the filter (360) can be removed from the venting hole (320) and thereby enables maintenance and repair of each component of the electrical connection unit (600) through the opened venting hole (320).

2. The battery pack of claim 1, wherein:
the electrical connection unit (600) comprises a cable for electrical connection of the battery pack, and a fuse (630) electrically connected to the cable, and
the filter (360) is removed from the venting hole (320) and thereby enables inspection, repair, or replacement of the cable or the fuse (630) through the opened venting hole (320).

3. The battery pack of claim 1, wherein:
the filter (360) is detachable by moving in a sliding manner from the venting hole (320).

4. The battery pack of claim 1, wherein:
the filter (360) further comprises locking rings (363) at both opposite ends of the filter (360),
the venting hole (320) comprises a concave part (321) at a position corresponding to the locking ring (363) at an edge of the venting hole (320), and
the locking ring (363) is inserted inside the pack case (300) through the concave part (321), and then the locking ring (363) is mounted by being slid along an edge of the venting hole (320) including the concave part (321).

5. The battery pack of claim 4, wherein:
the filter (360) further comprises a stopper (364) at an edge connecting between the both opposite ends of the filter (360),
the stopper (364) has a protrusion part protruding to the inside of the pack case (300), and
the protrusion part contacts the edge of the venting hole (320) to thereby stop the sliding of the filter (360).

6. The battery pack of claim 1, wherein:
the filter (360) comprises,
a filter part (362) that filters the venting gas; and
a filter frame (361) that supports the filter part (362),
wherein the filter part (362) is detachable from the filter frame (361).

7. The battery pack of claim 6, wherein:
the filter part (362) comprises:
a first filter member (362a) made of a flame retardant or non-combustible material; and
a second filter member (362b) and a third filter member (362c) having a mesh net structure made of metal material that is disposed on each of the front and rear surfaces of the first filter member (362a).

8. The battery pack of claim 7, wherein:
the first filter member (362a) is made of incombustible plastic, glass fiber reinforced plastics (GFRP), or carbon fiber reinforced plastics (CFRP).

9. The battery pack of claim 7, wherein:
the second filter member (362b) faces the inside of the pack case (300),
the third filter member (362c) faces the outside of the pack case (300), and
the third filter member (362c) has a finer mesh net structure than the second filter member (362b).

10. The battery pack of claim 6, wherein:
the filter frame (361) comprises:
a first filter frame member (361a) facing the inside of the pack case (300) and including an opening; and
a second filter frame member (361b) facing the outside of the pack case (300) and including an opening,
wherein the first filter frame member (361a) and the second filter frame member (361b) are spaced apart from each other by a predetermined distance, so that the filter part (362) can be mounted between the first filter frame member (361a) and the second filter frame member(361b).

11. The battery pack of claim 10, wherein:
the filter part (362) is exposed through the opening of the filter frame (361).

12. The battery pack of claim 10, further comprising:
a third filter frame member (361c) that connects respective edges of the first filter frame member (361a) and the second filter frame member (361b),
wherein the third filter frame member (361c) comprises an opening on at least one surface so that the filter part (362) can be detached from the frame member.

13. The battery pack of claim 1, wherein:
a plurality of battery packs are provided, and
are coupled to each other through mechanical or electrical connection between the plurality of battery packs.

14. An energy storage device comprising the battery pack of claim 1.

## Patentansprüche

1. Batteriepack, umfassend:
eine Zellmodulanordnung (100), welche einen Batteriezellenstapel umfasst, in welchem eine Mehrzahl von Batteriezellen gestapelt ist;
ein Packgehäuse (300), welches die Zellmodulanordnung (100) aufnimmt und ein Entlüftungsloch (320) an wenigstens einer Fläche umfasst;
einen Filter (360), welcher in dem Entlüftungsloch (320) angeordnet ist und dazu eingerichtet ist, lösbar zu sein,
wobei der Filter (360):
an dem Entlüftungsloch (320) angebracht ist, um Entlüftungsgas zu filtern, wenn ein thermisches Ereignis in der Batteriezelle auftritt, und
von dem Entlüftungsloch (320) derart entfernt werden kann, dass eine Wartung und eine Reparatur des Inneren des Batteriepacks zu normalen Zeiten begünstigt ist, und
eine elektrische Verbindungseinheit (600), welche in dem Packgehäuse (300) aufgenommen ist und an einer Fläche der Zellmodulanordnung (100) angeordnet ist,
**dadurch gekennzeichnet, dass** der Filter (360) von dem Entlüftungsloch (320) entfernt werden kann und dadurch eine Wartung und eine Reparatur jeder Komponente der elektrischen Verbindungseinheit (600) durch das geöffnete Entlüftungsloch (320) ermöglicht ist.

2. Batteriepack nach Anspruch 1, wobei:
die elektrische Verbindungseinheit (600) ein Kabel für eine elektrische Verbindung des Batteriepacks und eine Sicherung (630) umfasst, welche mit dem Kabel elektrisch verbunden ist, und
der Filter (360) von dem Entlüftungsloch (320) entfernt wird und dadurch eine Inspektion, eine Reparatur, oder ein Ersatz des Kabels oder der Sicherung (630) durch das geöffnete Entlüftungsloch (320) ermöglicht ist.

3. Batteriepack nach Anspruch 1, wobei:
der Filter (360) durch ein Bewegen in einer gleitenden Weise von dem Entlüftungsloch (320) lösbar ist.

4. Batteriepack nach Anspruch 1, wobei:
der Filter (360) ferner Verriegelungsringe (363) an beiden entgegengesetzten Enden des Filters (360) umfasst,
das Entlüftungsloch (320) einen konkaven Teil (321) an einer Position umfasst, welche dem Verriegelungsring (363) an einem Rand des Entlüftungslochs (320) entspricht, und
der Verriegelungsring (363) in dem Packgehäuse (300) durch den konkaven Teil (321) eingeführt wird und dann der Verriegelungsring (363) angebracht wird, indem dieser entlang eines Rands des Entlüftungslochs (320) gleitet, welches den konkaven Teil (321) umfasst.

5. Batteriepack nach Anspruch 4, wobei:
der Filter (360) ferner an einem Rand, welcher zwischen beiden entgegengesetzten Enden des Filters (360) verbindet, einen Stopper (364) umfasst,
der Stopper (364) einen vorstehenden Teil aufweist, welcher in das Innere des Packgehäuses (300) vorsteht, und
der vorstehende Teil den Rand des Entlüftungslochs (320) kontaktiert, um dadurch das Gleiten des Filters (360) zu stoppen.

6. Batteriepack nach Anspruch 1, wobei:
der Filter (360) umfasst,
einen Filterteil (362), welcher das Entlüftungsgas filtert; und
einen Filterrahmen (361), welcher den Filterteil (362) haltert,
wobei der Filterteil (362) von dem Filterrahmen (361) lösbar ist.

7. Batteriepack nach Anspruch 6, wobei:
der Filterteil (362) umfasst:
ein erstes Filterelement (362a), welches aus einem flammhemmenden oder einem nicht brennbaren Material hergestellt ist; und
ein zweites Filterelement (362b) und ein dritten Filterelement (362c), welche eine Gitternetzstruktur aufweisen, welche aus einem metallischen Material hergestellt ist, welche an jedem aus der vorderen und der hinteren Fläche des ersten Filterelements (362a) angeordnet ist.

8. Batteriepack nach Anspruch 7, wobei:
das erste Filterelement (362a) aus einem nicht brennbaren Kunststoff, glasfaserverstärkten Kunststoffen (GFRP) oder kohlenstofffaserverstärkten Kunststoffen (CFRP) hergestellt ist.

9. Batteriepack nach Anspruch 7, wobei:
das zweite Filterelement (362b) dem Inneren des Packgehäuses (300) zugewandt ist,
das dritte Filterelement (362c) dem Äußeren des Packgehäuses (300) zugewandt ist, und
das dritte Filterelement (362c) eine feinere Gitternetzstruktur als das zweite Filterelement (362b) aufweist.

10. Batteriepack nach Anspruch 6, wobei:
der Filterrahmen (361) umfasst:
ein erstes Filterrahmenelement (361a), welches dem Inneren des Packgehäuses (300) zugewandt ist und eine Öffnung umfasst; und
ein zweites Filterrahmenelement (361b), welches dem Äußeren des Packgehäuses (300) zugewandt ist und eine Öffnung umfasst,
wobei das erste Filterrahmenelement (361a) und das zweite Filterrahmenelement (361b) um einen vorbestimmten Abstand voneinander beabstandet sind, so dass der Filterteil (362) zwischen dem ersten Filterrahmenelement (361a) und dem zweiten Filterrahmenelement (361b) angebracht sein kann.

11. Batteriepack nach Anspruch 10, wobei:
der Filterteil (362) durch die Öffnung des Filterrahmens (361) freigelegt ist.

12. Batteriepack nach Anspruch 10, ferner umfassend:
ein drittes Filterrahmenelement (361c), welches jeweilige Ränder des ersten Filterrahmenelements (361a) und des zweiten Filterrahmenelements (361b) verbindet,
wobei das dritte Filterrahmenelement (361c) eine Öffnung an wenigstens einer Fläche umfasst, so dass der Filterteil (362) von dem Rahmenelement gelöst werden kann.

13. Batteriepack nach Anspruch 1, wobei:
eine Mehrzahl von Batteriepacks bereitgestellt ist, und
miteinander durch eine mechanische oder eine elektrische Verbindung zwischen der Mehrzahl von Batteriepacks gekoppelt ist.

14. Energiespeichervorrichtung, umfassend den Batteriepack nach Anspruch 1.

## Revendications

1. Bloc-batterie comprenant :
un ensemble module de cellules (100) comportant un empilement de cellules de batterie dans lequel une pluralité de cellules de batterie sont empilées ;
un boîtier de bloc (300) logeant l'ensemble module de cellules (100) et comportant un trou de ventilation (320) sur au moins une surface ;
un filtre (360) disposé dans le trou de ventilation (320) et configuré pour pouvoir être détaché,
dans lequel le filtre (360) :
est monté sur le trou de ventilation (320) pour filtrer des gaz de ventilation lorsqu'un événement thermique se produit dans la cellule de batterie, et
peut être retiré par le trou de ventilation (320) de manière à faciliter l'entretien et la réparation de l'intérieur du bloc-batterie en temps normal, et
une unité de connexion électrique (600) logée à l'intérieur du boîtier de bloc (300) et disposée sur une surface de l'ensemble module de cellules (100),
**caractérisé en ce que** le filtre (360) peut être retiré du trou de ventilation (320) et permet ainsi l'entretien et la réparation de chaque composant de l'unité de connexion électrique (600) à travers le trou de ventilation (320) ouvert.

2. Bloc-batterie selon la revendication 1, dans lequel :
l'unité de connexion électrique (600) comprend un câble pour la connexion électrique du bloc-batterie, et un fusible (630) connecté électriquement au câble, et
le filtre (360) est retiré du trou de ventilation (320) et permet ainsi l'inspection, la réparation ou le remplacement du câble ou du fusible (630) à travers le trou de ventilation (320) ouvert.

3. Bloc-batterie selon la revendication 1, dans lequel :
le filtre (360) peut être détaché en étant déplacé par coulissement à partir du trou de ventilation (320).

4. Bloc-batterie selon la revendication 1, dans lequel :
le filtre (360) comprend en outre des bagues de verrouillage (363) aux deux extrémités opposées du filtre (360),
le trou de ventilation (320) comprend une partie concave (321) à une position correspondant à la bague de verrouillage (363) au niveau d'un bord du trou de ventilation (320), et
la bague de verrouillage (363) est insérée à l'intérieur du boîtier de bloc (300) à travers la partie concave (321), puis la bague de verrouillage (363) est montée par coulissement le long d'un bord du trou de ventilation (320) comportant la partie concave (321).

5. Bloc-batterie selon la revendication 4, dans lequel :
le filtre (360) comprend en outre une butée (364) au niveau d'un bord reliant les deux extrémités opposées du filtre (360),
la butée (364) présente une partie en saillie qui fait saillie vers l'intérieur du boîtier de bloc (300), et
la partie en saillie entre en contact avec le bord du trou de ventilation (320) pour ainsi arrêter le coulissement du filtre (360).

6. Bloc-batterie selon la revendication 1, dans lequel :
le filtre (360) comprend,
une partie filtre (362) qui filtre le gaz de ventilation ; et
un cadre de filtre (361) qui supporte la partie filtre (362),
dans lequel la partie filtre (362) peut être détachée du cadre de filtre (361).

7. Bloc-batterie selon la revendication 6, dans lequel :
la partie filtre (362) comprend :
un premier élément filtrant (362a) constitué d'un matériau ignifuge ou incombustible ; et
un deuxième élément filtrant (362b) et un troisième élément filtrant (362c) présentant une structure maillée constituée d'un matériau métallique qui est disposée sur chacune des surfaces avant et arrière du premier élément filtrant (362a).

8. Bloc-batterie selon la revendication 7, dans lequel :
le premier élément filtrant (362a) est constitué de plastique incombustible, de plastiques renforcés de fibres de verre (GFRP) ou de plastiques renforcés de fibres de carbone (CFRP).

9. Bloc-batterie selon la revendication 7, dans lequel :
le deuxième élément filtrant (362b) est orienté vers l'intérieur du boîtier de bloc (300),
le troisième élément filtrant (362c) est orienté vers l'extérieur du boîtier de bloc (300), et
le troisième élément filtrant (362c) présente une structure maillée plus fine que le deuxième élément filtrant (362b).

10. Bloc-batterie selon la revendication 6, dans lequel :
le cadre de filtre (361) comprend :
un premier élément de cadre de filtre (361a) orienté vers l'intérieur du boîtier de bloc (300) et comportant une ouverture ; et
un deuxième élément de cadre de filtre (361b) orienté vers l'extérieur du boîtier de bloc (300) et comportant une ouverture,
dans lequel le premier élément de cadre de filtre (361a) et le deuxième élément de cadre de filtre (361b) sont espacés l'un de l'autre d'une distance prédéterminée, de sorte que la partie filtre (362) puisse être montée entre le premier élément de cadre de filtre (361a) et le deuxième élément de cadre de filtre (361b).

11. Bloc-batterie selon la revendication 10, dans lequel :
la partie filtre (362) est exposée à travers l'ouverture du cadre de filtre (361).

12. Bloc-batterie selon la revendication 10, comprenant en outre :
un troisième élément de cadre de filtre (361c) qui relie des bords respectifs du premier élément de cadre de filtre (361a) et du deuxième élément de cadre de filtre (361b),
dans lequel le troisième élément de cadre de filtre (361c) comprend une ouverture sur au moins une surface de sorte que la partie filtre (362) puisse être détachée de l'élément de cadre.

13. Bloc-batterie selon la revendication 1, dans lequel :
une pluralité de blocs-batteries sont fournis, et
sont couplés les uns aux autres par connexion mécanique ou électrique entre la pluralité de blocs-batteries.

14. Dispositif de stockage d'énergie comprenant le bloc-batterie selon la revendication 1.
